**Europäisches Patentamt**

**European Patent Office**

**Office européen des brevets**

(19)

(11) Veröffentlichungsnummer : **0 065 775**
**B1**

(12) **EUROPÄISCHE PATENTSCHRIFT**

(45) Veröffentlichungstag der Patentschrift :
07.08.85

(21) Anmeldenummer : 82104493.0

(22) Anmeldetag : 22.05.82

(51) Int. Cl.⁴ : **C 13 F 1/02, C 13 G 1/00**

(54) Verfahren und Vorrichtung zur kontinuierlichen Verdampfungskristallisation.

(30) Priorität : 25.05.81 DE 3120732

(43) Veröffentlichungstag der Anmeldung :
01.12.82 Patentblatt 82/48

(45) Bekanntmachung des Hinweises auf die Patenterteilung : 07.08.85 Patentblatt 85/32

(84) Benannte Vertragsstaaten :
BE DE FR GB IT NL

(56) Entgegenhaltungen :
BE-A- 547 010
DE-B- 1 254 589
DE-B- 2 627 825
FR-A- 392 540
GB-A- 882 760
US-A- 1 420 648

(73) Patentinhaber : Braunschweigische Maschinenbauanstalt AG
Am Alten Bahnhof 5
D-3300 Braunschweig (DE)

(72) Erfinder : Austmeyer, Klaus, Dr.-Ing.
Im Kirchwinkel 1a
D-3304 Wendeburg (DE)
Erfinder : Reinefeld, Erich, Prof. Dr.
Roseggerweg 18
D-3340 Wolfenbüttel (DE)

(74) Vertreter : Döring, Rudolf, Dr.-Ing.
Patentanwälte Dr.-Ing. R. Döring Dipl.-Phys. Dr. J.
Fricke Jasperallee 1a
D-3300 Braunschweig (DE)

## Beschreibung

Die Erfindung betrifft ein Verfahren und eine Vorrichtung zur kontinuierlichen Verdampfungskristallisation in einer aus Saft und Kristallen bestehenden Suspension für die Zuckergewinnung, bei dem die Suspension nacheinander durch mehrere voneinander getrennte Behandlungsräume hindurchgeleitet und in den Behand-lungsräumen bei gleichzeitiger Wärmezufuhr un-ter Aufrechterhaltung eines Brüdendruckes von etwa 0,1 bis 0,3 bar in eine interne Umlaufströmung versetzt und in dem ersten Raum mit einer übersättigten Zulauflösung sowie in den nachfolgenden Räumen dosiert mit zugeführtem Einzugssaft vermischt wird.

Bei den bekannten Verfahren vorgenannter Art sind die Behandlungsräume entweder nebeneinander (DE-B-12 54 589) oder übereinander (DE-B-26 27 825, PL-C-85 145) angeordnet und mit Ein-richtungen zur Überlauf- oder Ablaufregelung versehen in der Weise, daß die in der ersten Kammer befindliche Suspension nacheinander die folgenden Kammern durchströmt und in diesen Kammern mit zugeführtem Einzugssaft vermischt wird. Die interne Umlaufströmung der Suspension wird in den Kammern der vorgenannten Ausführungsformen entweder allein durch die Einwirkung der in den Kammern vorgesehenen Heizeinrichtungen oder in Verbindung mit in den Kammern angeordneten antreibbaren Rührele-menten erzielt.

Bei anderen bekannten Verfahren (Zeitschrift « Zucker » 24. Jahrgang Heft 22, Seiten 687-699 und Heft 23, Seiten 715-725) erfolgt die kontinuierliche Verdampfungskristallisation entweder in nebeneinander angeordneten Kammern mit einer Überlaufregelung oder aber in einem stehenden Zylindern, welcher als Variante des klassischen diskontinuierlichen Kochapparates ausgebildet und welcher mit um eine zentrale Welle umlaufend bewegten Rührelementen ausgerüstet ist.

Auch bei einer Anordnung der Behandlungsräume nebeneinander in einem liegenden Zylinder sind bereits Rührarme zur Förderung der Umlaufströmung verwendet worden.

Sowohl bei dem diskontinuierlichen Verfahren als auch beim kontinuierlichen Verfahren der Verdampfungskristallisation ergeben sich Probleme dadurch, daß eine laufende Veränderung der Suspension während der Behandlung erfolgt und zu Beginn des Behandlungsvorganges während des besonders ausgeprägten Kristallwachstums die Gefahr der Bildung von Konblomeraten besteht, die sicht mit zunehmender Behandlungsdauer und Vergrößerung der Kristallmasse vermindert bei gleichzeitiger Erhößerung der Zähigkeit der Suspension. Durch die sich verändernde Suspension ergeben sich während der Behandlungsdauer auch unterschiedliche Bedingungen für die Erzielung eines günstigen Wärmeüberganges, durch den eine Verkürzung der Behandlungsdauer bzw. Senkung des treibenden Temperaturgefälles und damit eine Energieeinsparung möglich sind.

Bei den bekannten Verfahren sowohl bei der diskontinuierlichen als auch bei der kontinuierlichen Kristallisation ist es bisher nich möglich, den unterschiedlichen Erfordernissen bei der Behandlung der Suspension vom Beginn des Kristallisationsprozesses bis zur Beendigung des Prozesses hinreichend Rechnung zu tragen.

Ausgehend von vorgenannten Erkenntnissen liegt der Erfindung die Aufgabe zugrunde, das einleitend genannte Verfahren so weiterzubilden, daß eine unterschiedliche Behandlung der Suspension in der Phase der Kristallbildung sowie der nachfolgenden Konzentration des Kristallanteiles bei gleichzeitiger Verminderung des Energieaufwandes erfolgt.

Zur Lösung vorstehender Aufgabe sieht die Erfindung die im Anspruch 1 genannten Maßnahmen vor.

Durch diese Verfahrensmaßnahmen wird in den ersten Behandlungsräumen durch die Einwirkung hochtouriger Mischrührer infolge der erzeugten, ebenfalls hochturbulenten Scherfelder die Konglomeratbildung praktisch vollkommen vermieden und gleichzeitig eine Einengung der Korngrößenverteilung während des ersten maßgeblichen Wachstums der Kristalle erreicht. Dabei wird gleichzeitig eine Homogenisierung der Suspension zum Zwecke des grö-ßtmöglichen Stoffüberganges erzielt.

Demgegenüber wird die Suspension in dem oder den nachfolgenden Behandlungsräumen lediglich in eine laminare Umwälzströmung versetzt. Durch diese laminare Strömung wird eine mechanische Zerstörung der Kristalle in der zu-nehmend zäher werdenden Suspension verhin-dert. Dabei entsteht wegen der geringen Blasenbildung in den Behandlungsräumen nur ein geringer Auftriebseffekt. Die Umwälzung der Suspension wird jedoch durch die niedertourigen Rührer aufrechterhalten und hierdurch eine ent-sprechende Verbesserung des Wärmeü-berganges von der Heizeinrichtung auf die Suspension in diesen Behandlungskammern erreicht.

Dadurch, daß in allen Räumen die Zufuhr des Einzugssaftes auf der Saugseite des Rührers erfolgt, wird eine intensive und gleichmäßige Vermischung des Einzugssaftes mit der Suspension sichergestellt und durch die Einstellung des Niveaus der Suspension in jeder Behandlungskammer auf einen möglichst niedrigen Wert bei gleichzeitiger Einstellung des Brüdendruckes von etwa 0,1 bis 0,3 bar die erforderliche Verdampfung mit relativ geringer Heizleistung erzielt. Hier wirken sich der außerordentlich geringe statische Druck, welcher im Bereich des Wärmeüberganges auch in den unteren Zonen der Behandlungsräume in der Suspension herrscht, sowie die hohe Umlaufgeschwindigkeit der Suspension besonders günstig aus. Dabei ist es von Vorteil, daß mit einem geringen Temperaturgefälle gearbeitet werden kann und somit der Einsatz niedriggespannten Brüdens möglich ist. Schließlich wird auch durch die unterschiedliche Behandlung der Suspension der Energieaufwand für die Erzeugung der Misch- bzw. Umlaufströmung durch die Verwendung der unterschiedlichen Rührer vermindert.

Das genannte möglichst niedrige, jedoch die Umlaufströmung gewährleistende Niveau läßt sich auf einen optimalen Wert einstellen, welcher sich ergibt, wenn der Wärmedurchgangskoeffizient bei gleichbleibendem Suspensionszustand sein Maximum erreicht.

Die Umlaufströmung wird in bekannter Weise im äußeren Bereich der Behandlungskammern ansteigend geführt, so daß ein Ringwirbel entsteht, wobei der Anstiegsweg bei dem angestrebten niedrigen bzw. optimalen Niveau höchstens dem Ringwirbeldurchmesser entspricht.

Unter der obigen Angabe der ersten Behandlungsräume gemäß Anspruch 1 sind mindestens die beiden erstdurchströmten Räume von insgesamt 4 oder 5 Räumen bzw. etwa die Hälfte der Gesamtzahl der Räume gemeint.

Zweckmäßig ist es, wenn die Suspension niveaugesteuert aus den einzelnen Behandlungsräumen jeweils druckseitig abgezogen und saugseitig dem nächstfolgenden Behandlungsraum zugeführt wird. Hierdurch wird zum einen sichergestellt, daß in den einzelnen Behandlungsräumen das Niveau nicht unter einen Wert sinkt, durch den die Umlaufströmung gestört wird, während andererseits eine Erhöhung des Niveaus, welche automatisch auch zu einer Erhöhung des statischen Druckes in der Suspension führen würde, unterbunden wird. Die druckseitige Entnahme der Suspension ist deshalb zweckmäßig, weil die Suspension im Druckraum, also nach unmittelbarer Durchmischung durch den Rührer weitgehend homogenisiert ist. Die saugseitige Zuführung der Suspension zum nächstfolgenden Behandlungsraum gewährleistet, ähnlich wie die Zuführung des Einzugssaftes, eine schnelle Vermischung der zugeführten Suspension mit dem Inhalt des Behandlungsraumes, dem die Suspension zugeführt wird.

Der Einzugssaft wird zweckmäßigerweise den einzelnen Behandlungsraumen in Abhängigkeit von der jeweiligen Zähigkeit bzw. elektrischen Leitfähigkeit oder Siedepunkterhöhung bzw. Dichte der in dem entsprechenden Behandlungsraum befindlichen Suspension geregelt zugeführt. Durch diese Art der Regelung können beispielsweise Schwankungen in der Heizleistung ausgeglichen werden. Wenn beispielsweise die Heizleistung vorübergehend geringer wird, verlangsamt sich auch die Viskositätsänderung, so daß in diesem Falle nur eine geringere Menge des Einzugssaftes in den entsprechenden Behandlungsraum überführt wird. Die Verweilzeit der Suspension in dem Behandlungsraum verlängert sich entsprechend, da gleichzeitig mit der Verminderung der Zuführung des Einzugssaftes auch eine Verlangsamung der Niveauänderung einhergeht und demgemäß der niveaugesteuerte Abzug der Suspension aus dem betreffenden Behandlungsraum verringert wird.

Das neue Verfahren ist insbesondere für die Kristallisation von Nachprodukten bei der Zuckergewinnung geeignet, weil bei der Behandlung des Nachproduktes die Gefahr der Inkrustation in den einzelnen Behandlungsräumen bzw. in den die Behandlungsräume verbindenden Rohrleitungen gering ist. Bei dieser bevorzugten Anwendung des Verfahrens können bereits vier oder fünf Behandlungsräume ausreichen, von denen z. B. in den beiden ersten die genannte hochturbulenten Scherfelder durch entsprechend hochtourige Mischrührer erzeugt werden, während in den nachfolgenden Behandlungsräumen die Suspension durch die Einwirkung der niedertourigen Rührer nur in eine laminare Umlaufströmung versetzt wird.

Während bei dem bisher beschriebenen Verfahren die Zuführung des Einzugssaftes in alle Kammern mit Ausnahme der ersten Kammer vorgesehen ist, kann insbesondere bei der Kristallisation von Suspensionen geringer Reinheit, wie Nachprodukt-Suspensionen, auch eine andere Verfahrensweise erfolgen, die zu einer erhöhten Ausbeute führt. Diese besteht darin, daß das Verfahren entsprechend dem Anspruch 4 gestaltet wird. Bei diesem Verfahren erfolgt die bereits genannte und von der Zähigkeit, der elektrischen Leitfähigkeit, der Siedepunkterhöhung oder Dichte der Suspension abhängige Zufuhr des Einzugssaftes allenfalls in die ersten Behandlungskammern, während die Zustandsregelung der Suspension in den anderen bzw. letztdurchströmten oder allen Behandlungskammern durch die Einstellung des Temperaturgefälles zwischen dem Heizmedium und der Suspension erfolgt. Bei der Kristallisation von Nachprodukt-Suspensionen kann auf eine Zuführung des Einzugssaftes in die Behandlungskammern ganz versichtet werden, oder aber es erfolgt die Zuführung des Einzugssaftes bei z. B. 10 Behandlungskammern in höchstens 4 dieser Kammern. Demgegenüber wird die Zuführung des Einzugssaftes bei der Kristallisation von Suspensionen höherer Reinheit in der Regel über eine größere Anzahl der Behandlungskammern, z. B. bei insgesamt 10 Behandlungskammern in 7 bis 9 der erstdurchströmten Behandlungskammern zweckmäßig vorgenommen, so daß nur in den letzten Kammern die beschriebene Zustandsregelung der Suspension durch Einstellung des Temperaturgefälles zwischen dem Heizmedium und der Suspension erfolgt.

Bei kontinuierlichen Kristallisationen aus Lösungen höherer Reinheit, insbesondere bei der Weißzucker-Kristallisation — im folgenden wird diese Anwendungsart als Weißzucker-Kristallisation bezeichnet — ist eine Inkrustation praktisch unvermeidbar. Alle Bemühungen, dieser Inkrustation zu begegnen, sind bisher fehlgeschlagen, so daß sich die bisherigen kontinuierlichen Kristallisationsverfahren für die Weißzuckerherstellung in der Praxis nicht haben durchsetzen können.

Um hier Abhilfe zu schaffen, sieht die Erfindung vor, daß bei der vorgenannten Anwendung der Verfahrens die Suspension jeweils an einem der Behandlungsräume, beginnend beim letzten Behandlungsraum, vorbeigeführt und der jeweilig freie Behandlungsraum mittels Dampf, Wasser oder Dünnsaft von den Inkrustationen befreit sowie nachfolgend mit der Suspension des jeweils vorhergehenden Behandlungsraumes gefüllt wird.

Durch die vorgenannte Behandlungsweise erfolgt eine Befreiung der Behandlungsräume von den Inkrustationen im periodischen Wechsel.

Bei der Kristallisation von Suspensionen geringer Reinheit, wie Nachprodukt-Suspensionen, ist wegen der geringeren Gefahr der Inkrustationen eine solche Reinigung der Behandlungsräume in zyklischer Folge im allgemeinen nicht erforderlich. Vielmehr genügt es, wenn gemäß Anspruch 6 verfahren und lediglich dafür gesorgt wird, daß bei auftretenden Inkrustationen in einem der Behandlungsräume dieser von den Inkrustationen in der oben beschriebenen Weise befreit werden kann.

Abweichend von den bisherigen Bemühungen wird durch die Erfindung nicht der Versuch unternommen, die Inkrustationen zu vermeiden, sondern Maßnahmen zu treffen, welche während des kontinuierlichen Kristallisationsverfahrens die Beseitigung von Inkrustationen in jeweils einem der Behandlungsräume bewirken, so daß trotz der auftretenden Inkrustationen in den einzelnen Behandlungskammern keine Betriebsunterbrechung des Verfahrens erforderlich wird.

Die Befreiung der jeweils nich in das Kristallisationsverfahren eingeschaltete Behandlungskammer ist dabei ohne Schwierigkeiten deshalb möglich, weil diese Befreiung praktisch durch eine Art « Auskochen » erfolgt. Der entsprechenden Behandlungskammer wird also die Heizenergie in gleicher Weise wie beim Kristallisationsprozeß zugeführt, wobei statt des Kochvorganges der Suspension das Auskochen des Behandlungsraumes durch den zugeführten und in der Kammer kondensierten Dampf bzw. durch das zugeführte Wasser oder den Dünnsaft erfolgt. Die zum Auskochen der Kammer benutzte Flüssigkeit kann nach der erfolgten Auflösung der Inkrustationen zur Rückgewinnung des Zuckers wieder dem Dünnsaft zugeführt werden, so daß keine Zuckerverluste durch die Beseitigung der Inkrustationen in Kauf genommen werden müssen und der wärmetechnische Mehraufwand gering ist.

Zur Durchführung des vorgenannten Verfahrens geht die Erfindung von bekannten Vorrichtungen mit Behandlungsräumen aus, die als voneinander getrennte zylindrische Kammern übereinander angeordnet sind, sowie mit Einrichtungen zur dosierten Zuführung des Einzugssaftes, zum Abführen des Brüdens und zur Überführung der Suspension von der oberen in die jeweils darunterliegende Kammer versehen sind, wobei die voneinander getrennten Kammern jeweils entsprechend dem Rührwerkskochapparat für die diskontinuierliche Kristallisation ausgebildet sind und eine von Heizdampf durchströmbare Heizkammer mit radial außenliegenden Rohr-, Ring- oder Plattenheizkörpern oberhalb des Bodens sowie ein zentrisches Leitrohr und ein unten in diesem Leitrohr gehaltenes Rührwerk aufweisen. Derartige Vorrichtungen kennzeichnen sich erfindungsgemäß dadurch, daß die Rührwerke der erstdurchströmten Kammer bzw. Kammern als hochtourige Mischrührer und die Rührwerke der nachfolgenden Kammern als niedertourige Umwälzrührer ausgeführt sind, und daß in den Kammern jeweils Niveausteuerungen zur Einpegelung des Niveaus dicht oberhalb der Heizkammern vorgesehen sind.

Als hochtouriger Mischrührer kommt beispielsweise ein Rührer mit einem schmalflügeligen Propeller in Betracht, während als niedertouriger Umwälzrührer ein kaplanförmiger Propeller beispielsweise zur Anwendung kommen kann. Statt dieser Rührer mit einem Propeller als Rührorgan können auch andere Ausführungsformen verwendet werden, die in der Technik allgemein bekannt sind.

Zur Einführung des Einzugssaftes in die Kammern ist bei einer zweckmäßigen Weiterbildung der Vorrichtung ein oberhalb des Rührers der jeweiligen Kammer ausmündendes Zulaufrohr über ein Steuerventil mit einer Speiseleitung verbunden, während im Raum unterhalb des Rührers bzw. im Boden des jeweiligen Behandlungsraumes ein mit einem Steuerventil oder einer Steuerklappe ausgerüstetes Suspensionsabzugsrohr vorgesehen und mit einem Suspensionszuführrohr der nächstfolgenden Kammer verbunden ist. Das Steuerventil des Zulaufrohres für den Einzugssaft ist mit einem in der zugehörigen Kammer angeordneten Fühler zur Ermittlung der Zähigkeit, der elektrischen Leitfähigkeit, der Dichte oder der Siedepunkterhöhung der Suspension und das Steuerventil oder die Steuerklappe des Suspensionsabzugsrohres mit einem in der gleichen Kammer dicht oberhalb der Heizeinrichtung angeordneten Niveaufühler oder -schalter verbunden. Hierdurch ist es möglich, in Abhängigkeit von bestimmten Zustandsgrößen der Suspension in den einzelnen Kammern die Zuführung des Einzugssaftes bzw. die Überführung der Suspension von der einen in die andere Kammer zu steuern bzw. zu regeln und eine gleichmäßige Behandlung der jeweils in den einzelnen Kammern befindlichen Suspension zu gewährleisten.

Insbesondere bei Vorrichtungen zur Kristallisation von Suspensionen geringer Reinheit, wie Nachproduktsuspensionen, kann diese abweichend von vorgenannter Ausführung gem. Anspruch 9 ausgebildet sein. Danach sind nur die erstdurchströmten Kammern mit der Speiseleitung für die Zuführung des Einzugssaftes verbunden. Die in den Kammern vorgesehenen Niveaufühler oder -schalter der erstdurchströmten Kammern sind in der beschriebenen Weise mit einem Steuerventil im Zulaufrohr für den Einzugssaft, in den anderen bzw. letzten Kammern dagegen mit Temperaturreglern für den Heizdampf der Heizkammern verbunden. Bei einer solchen Ausbildung der Vorrichtung werden bei der Nachproduktkristallisation erhöhte Ausbeuten der letzten Kammern erzielt.

Eine konstruktiv einfache Lösung ergibt sich, wenn bei mehreren übereinander angeordneten Kammern mit hochtourigen Rührern bzw. bei mehreren übereinander angeordneten Kammern mit niedertourigen Rührern die hochtourigen bzw. niedertourigen Rührer jeweils auf einer gemeinsamen Antriebswelle angeordnet sind.

Bei der Behandlung von Nachprodukt-Suspensionen wird die Förderung der Suspension durch die einzelnen Kammern zur Erzielung einer Umlaufströmung erheblich durch die zunehmende Zähigkeit der Suspension erschwert. Hierdurch ergeben sich, insbesondere in der oder den letzten Behandlungskammern, äußerst ungünstige Betriebszustände sowohl hinsichtlich der Wärmeübertragung als auch in bezug auf die notwendige Leistung des Rührwerkes.

Um hier Abhilfe zu schaffen, empfiehlt es sich, bei Vorrichtungen zur Kristallisation von Nachprodukt-Suspensionen den Durchmesser der Behandlungskammern von der erstdurchströmten bis zur letztdurchströmten zu vergrößern oder wenigstens die von der Suspension zuletzt durchströmten Kammern mit einem größeren Durchmesser auszubilden als die erstdurchströmten Kammern. Es soll, mit anderen Worten, der hydraulische Durchmesser der Durchströmten Heizelemente bei Aufrechterhaltung der größe der Heizfläche und der Höhe der Heizkammer entsprechend der Zunahme der Zähigkeit der Suspension vergrößert werden.

Bei Vorrichtungen zur Weißzucker-Kristallisation sind Vorkehrungen für die bereits einleitend beschriebene Beseitigung der Inkrustationen zu treffen. Aus diesem Grunde sieht die Erfindung bei Vorrichtungen zur Kristallisation aus Lösungen höherer Reinheit, wie Weißzucker-Kristallisation, vor, daß alle Kammern zur Beseitigung von Inkrustationen an eine Zuführungsleitung für Dampf, Wasser und/oder Dünnsaft über Steuerventile angeschlossen und bodenseitig mit ventilgesteuerten Ablaufleitungen für das die Inkrustation auflösende Medium ausgerüstet sind, und daß die Zu- und Ablaufrohre für die Suspension an einer durchgehenden Speiseleitung jeweils über Dreiwegeventile angeschlossen sind. Hierdurch ist es möglich, jeweils wenigstens eine der Kammern während des normalen Betriebes der anderen Kammern von den Inkrustationen zu befreien und die Kammern nacheinander zu reinigen, so daß der kontinuierliche Kristallisationsprozeß hierdurch nicht unterbrochen werden muß.

Bei einer Kristallisation aus Lösungen geringer Reinheit, wie Nachproduktsuspensionen, ist eine zyklische Reinigung der Kammern wegen der geringeren Inkrustationsgefahr nicht notwendig, jedoch empfiehlt es sich, Vorkehrungen zu treffen, um bei einem Auftreten betriebsstörender Inkrustationen diese beseitigen zu können. Erreicht wird dies durch eine Ausbildung gem. Anspruch 13, die es ermöglicht, wahlweise die eine oder andere Kammer während des Betriebes zu entleeren und zu reinigen.

Die jeweilige Anzahl der Kammern kann unterschiedlich gewählt werden, wobei im allgemeinen für die Behandlung von Nachprodukt-Suspensionen eine geringere Anzahl von Kammern erforderlich ist als für die Weißzucker-Kristallisation.

Bei einer Vielzahl von Kammern empfiehlt es sich, diese in Form zweier aufrechtstehender Türme oder Zylinderbehälter zu bilden und die Kammern der Türme bzw. Zylinderbehälter strömungstechnisch so in Reihe zu schalten, daß die Kammern jedes Turmes oder jedes Zylinderbehälters von oben nach unten durchströmt werden.

Die Zeichnung gibt zwei Ausführungsbeispiele der Vorrichtungen zur Durchführung des Verfahrens in schematischer Darstellung wieder.

Es zeigen :

Figur 1 eine schematische Darstellung in Form eines Längsschnittes durch eine Vorrichtung zur kontinuierlichen Kristallisation von Nachprodukt für die Zuckergewinnung,

Figur 2 ebenfalls eine im Längsschnitt wiedergegebene schematische Darstellung einer Vorrichtung wie sie insbesondere zur kontinuierlichen Kristallisation aus Lösungen höherer Reinheitt, z. B. zur Weißzucker-Kristallisation verwendet wird.

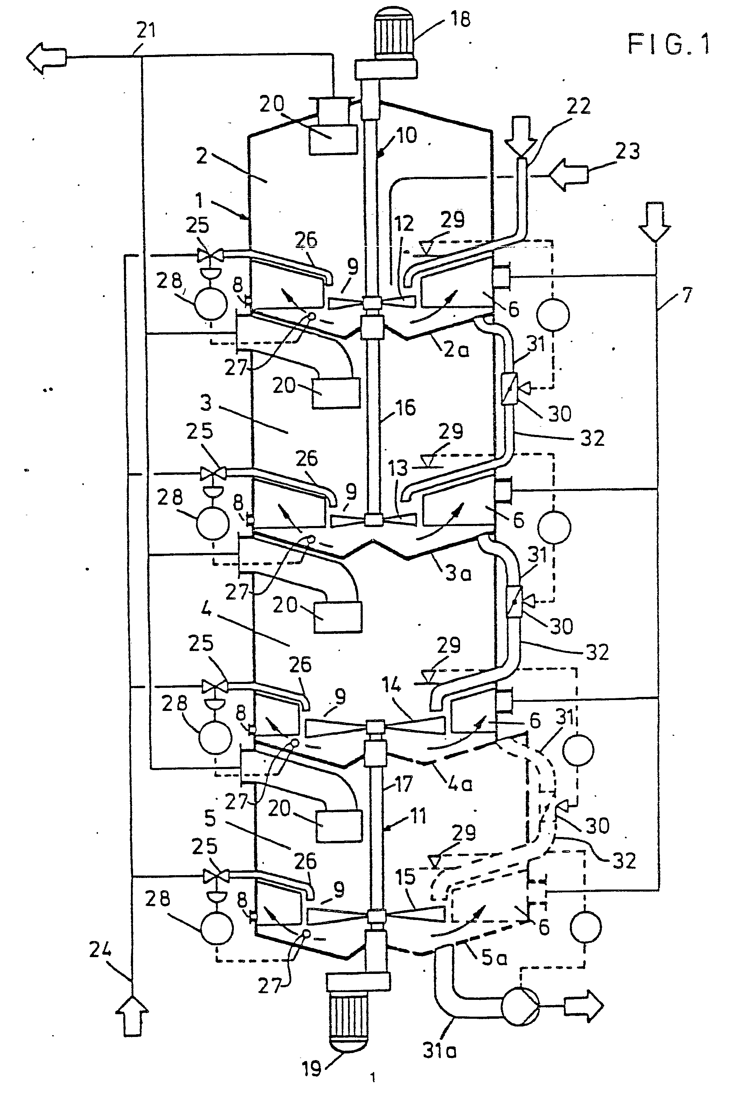

Die Anordnung gem. Fig. 1 besteht aus einem aufrechtstehenden zylindrischen Behälter, welcher insgesamt mit 1 bezeichnet ist. Der zylindrische Behälter 1 ist in diesem Beispiel unterteilt in vier Behandlungsräume 2 bis 5, welche voneinander getrennte zylindrische Kammern bilden, die übereinander angeordnet sind. Die Kammern 2 bis 5 dienen zur Aufnahme der zu behandelnden aus Saft und Kristallen bestehenden Suspension, welche in den einzelnen Kammern jeweils in eine Umlaufströmung versetzt wird. Die Böden 2a bis 5a der Kammern sind dem Verlauf der Stromlinien angepaßt. Relativ dicht oberhalb der Böden 2a bis 5a der befinden sich in den einzelnen Behandlungskammern die Heizkammern 6, welche aus Rohr-, Platten- oder Ringheizkörpern bestehen mit frei durchströmbaren Querschnitten zwischen den Heizkörpern, um die Umlaufströmung der Suspension zu ermöglichen. Die Heizkammern 6 sind in dem Beispiel an eine gemeinsame Heizdampfleitung 7 angeschlossen. Die Austrittsstutzen 8 der Heizkammern 6 sind ihrerseits mit einer in der Zeichnung nicht wiedergegebenen Sammelleitung für das Kondensat verbunden.

Die Heizkammern 6 umschließen ein zentrisches Leitrohr 9, in welches die insgesamt mit 10 bzw. 11 bezeichneten Rührwerke mit ihren Rührern 12, 13 bzw. 14, 15 hineinragen. Dabei sind die beiden Rührer 12 und 13 über eine gemeinsame Antriebswelle 16 mit dem Antriebsmotor 18 bzw. die Rührer 14, 15 über die gemeinsame Welle 17 mit dem Motor 19 verbunden.

Die Rührwerke 10 und 11 erzeugen in den Kammern 2 bis 5 Umlaufströmungen der Suspensionen in der Weise, daß diese in Richtung der Pfeile durch die freien Querschnitte der Heizkammern 6 von unten nach oben hindurchströmt und von oben in die zentrischen Leitrohre 9 gelangt.

Zur Abführung des Brüdens aus den einzelnen Behandlungskammern 2 bis 5 sind in diesen Kammern angeordnete Abzugseinrichtungen 20 vorgesehen, welche mit einer gemeinsamen Abführungsleitung 21 verbunden sind, die zu einer in der Zeichnung nicht wiedergegebenen Brüdenkompression führen kann. Die Brüdenabzugseinrichtungen 20 können dabei mit Filtern, Abscheidern oder dgl. in bekannter Weise ausgerüstet sein.

In die Behandlungskammer 2 wird in einem nicht dargestellten Dünnschichtverdampfer konzentrierte Zulauflösung durch die Zuführungsleitung 22 eingeführt. Weiterhin ist die Behandlungskammer 2 mit einer Zuführungsleitung 23 verbunden, durch welche der Kristallfuß (Saatgut) eingespeist wird. Die Zuführungsleitung 22 endet in dem zentrischen Rohr 9 der Kammer 2 dicht oberhalb der Außenkante des Rührers 12.

Die Zuführung der Einzugslösung zu den Behandlungskammern 2 bis 5 erfolgt über eine Speiseleitung 24, welche über Steuerventile 25 mit den einzelnen Zulaufrohren 26 der Kammern 2 bis 5 verbunden ist. Dabei kann aber auch auf eine Zuführung der Einzugslösung zur Kammer 2 verzichtet werden. Die Zulaufrohre 26 enden ebenfalls auf der Saugseite der Rührer 12 bis 15 in dem zentrischen Leitrohr 9. Die Steuerventile 25 sind mit Fühlern 27 und Regeleinrichtungen 28 verbunden zur Regelung der Zähigkeit, der elektrischen Leitfähigkeit, der Dichte oder der Siedepunkterhöhung der in der jeweiligen Kammer befindlichen Suspension. Ferner ist in jeder Kammer ein Niveaufühler 29 vorgesehen, über welchen der Füllungsstand der Suspension in jeder Kammer dicht oberhalb der Heizkörper gehalten wird, da die Niveaufühler 29 über elektrische Leitungen ein Ventil bzw. eine Klappe 30 zwischen einem Suspensionsabzugsrohr 31 der jeweils zugehörigen Kammer und einem Suspensionszuführungsrohr 32 für die nächstfolgende Kammer steuern, wobei das Suspensionsabzugsrohr 31 im jeweiligen Boden 2a bis 5a der Kammern 2 bis 5 angeordnet ist, während die Suspensionszuführungsrohre 32 wiederum auf der Saugseite der Rührer 12 bis 15 in dem zentrischen Leitrohr enden. Das Suspensionsabzugsrohr 31a der Kammer 5 dient dabei zur Weiterleitung der fertigbehandelten Suspension, welche als Produktmagma den Weiterverarbeitungsstationen zugeführt wird.

Das Rührwerk 10 mit den Rührern 12 und 13 in den Kammern 2 und 3 ist als hochtouriger Mischrührer ausgebildet und in der zeichnerischen Darstellung mit Rührern 12 und 13 ausgerüstet, welche im Durchmesser kleiner gehalten sind als die Rührer 14 und 15 des Rührwerkes 11, welches den Kammern 4 und 5 zugeordnet ist.

Das Rührwerk 11 ist im Gegensatz zu dem Rührwerk 10 als niedertouriger Umwälzrührer ausgebildet.

Durch die unterschiedliche Ausbildung der Rührwerke wird in den Kammern 2 und 3 eine intensive Zirkulationsströmung mit hochturbulenten Scherfeldern erzeugt bei gleichzeitiger Umwälzung der in diesen Kammern befindlichen Suspensionen. Hierdurch wird die Entstehung von Konglomerat bei der in den Kammern 2 und 3 besonders wirksamen Kristallbildung vermieden. Demgegenüber wird in den Kammern 4 und 5 durch die dort befindlichen niedertourigen Rührer lediglich eine laminare Umlaufströmung erzeugt, in welcher bei günstiger Wärmezufuhr das Kristallwachstum beendet und eine erhöhte Kristallkonzentration erreicht werden. Dabei wird durch die Niveauregulierung der Suspension in den Kammern 2 bis 5 dicht oberhalb der Heizkammer 6 der hydrostatische Druck in der Suspension sehr niedrig gehalten und hierdurch die Verdampfung des Wassers aus der Suspension sehr begünstigt.

Um bei der zunehmenden Zähigkeit der Suspension auf ihrem Wege durch die Behandlungskammern 2 bis 5 auch in den Kammern 4 und 5 eine Umwälzström ung mit hoher Geschwindigkeit der Suspension durch die Durchströmquerschnitte der Heizkammer 6 bei wirtschaftlich vertretbarer Antriebsleistung des Rührwerkes 11 zu gewährleisten, kann gemäß der gestrichelten Darstellung des rechten Teiles der Behandlungskammer 5 in der Fig. 1 die Anordnung so ausgebildet sein, daß von der erstdurchströmten bis zur letztdurchströmten Kammer deren Querschnitt zunimmt bzw. daß zumindest die Kammern 4 und 5 gegenüber den Kammern 2 und 3 mit einem größeren Querschnitt ausgebildet sind, so daß ohne Erhöhung des Niveaus der Suspension in diesen Kammern bei unveränderter Heizfläche größere Durchströmquerschnitte in den Heizkammern 6 vorgesehen werden können.

Statt der in der Fig. 1 wiedergegebenen Anzahl von vier Behandlunskammern können auch mehr Kammern vorgesehen sein, wobei die Anzahl der Kammern die Verweilzeitverteilung der Suspension in der Anordnung bestimmt.

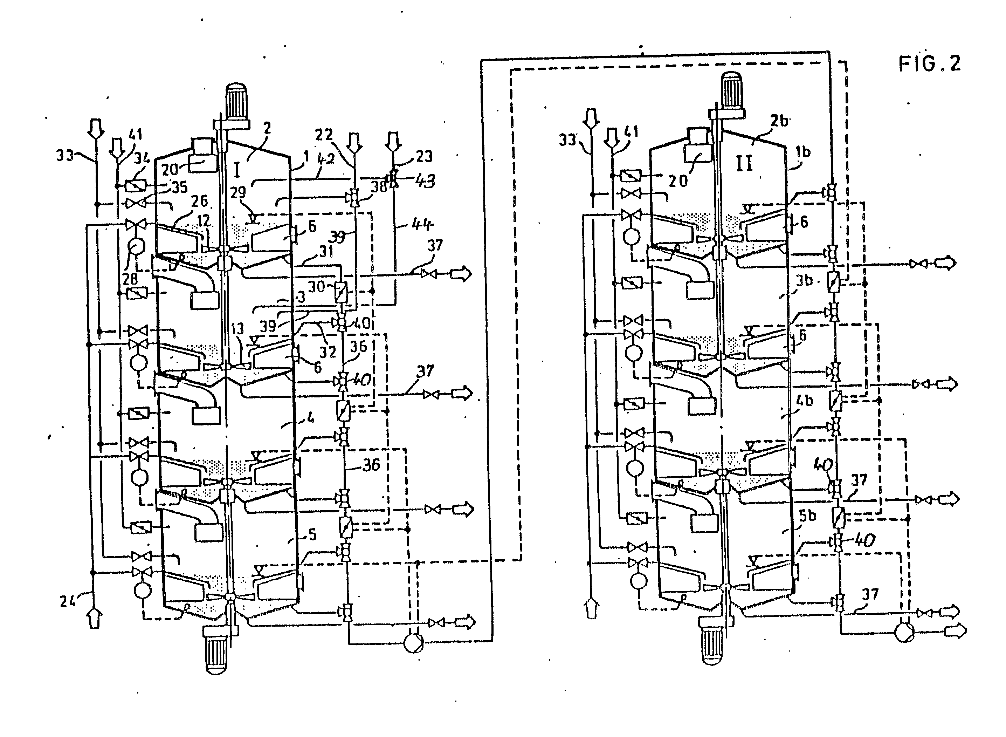

Während bei der Kristallisation des Nachproduktes kaum Inkrustationen in den Behandlungskammern auftreten, sind diese bei der kontinuierlichen Kristallisation aus Lösungen höherer Reinheit wie bei der Weißzucker-Kristallisation unvermeidbar. Aus diesem Grunde ist die Anordnung nach dem Beispiel der Fig. 2 so ausgebildet, daß wenigstens jeweils eine der Behandlungskammern nicht von der Suspension durchströmt wird, sondern durch Zuführung von Dampf, Wasser oder Dünnsaft durch Auskochen von den Inkrustationen befreit werden kann.

Die Anordnung gem. Fig. 2 ist bezüglich der einzelnen Kammern praktisch in gleicher Weise aufgebaut, wie dies im Zusammenhang mit Fig. 1 beschrieben wurde. Im Vergleich mit der Anordnung nach Fig. 1 sind im Beispiel der Fig. 2 jedoch zwei Säulen I und II aus Zylinderbehältern 1 und 1b vorgesehen, die jeweils vier Behandlungskammern 2 bis 5 bzw. 2b bis 5b aufweisen.

Die Einrichtungen für die Abführung des Brüdens sowie für die Zuführung des Einzugssaftes und auch die Steuerungseinrichtungen für die Niveauregelung und die Zuführung des Einzugssaftes zu den einzelnen Behandlungskammern sind übereinstimmend mit der Anordnung nach Fig. 1 ausgebildet, so daß sich eine nähere Beschreibung dieser Einrichtungen erübrigt. Aus Übersichtlichkeitsgründen sind die vorgenannten Einrichtungen in der Fig. 2 vereinfacht dargestellt und soweit erforderlich mit den gleichen Bezugszeichen versehen, wie dies in der Fig. 1 geschehen ist.

Abweichend von der Ausbildung nach Fig. 1 sind im Beispiel der Fig. 2 alle Kammern 2 bis 5 bzw. 2b bis 5b zusätzlich mit einer Zuführungsleitung 33 für Dampf und in dem dargestellten Beispiel fernerhin mit einer Zuführungsleitung 41 für Dünnsaft bzw. Wasser über Ventile 34 bzw. 35 verbunden. Der Dampf bzw. das Wasser oder auch der Dünnsaft dienen dabei für die jeweils nicht am Kristallisationsprozeß teilnehmende Kammer oder Kammern als Reinigungsmedium für die Beseitigung der Inkrustationen.

Es ist ferner abweichend von der Anordnung nach Fig. 1 bei der Vorrichtung nach Fig. 2 die Zuführungsleitung 22 für die übersättigte Zulauflösung über ein Ventil 38, mit einer Zuführungsleitung 39 zu der Kammer 3 verbunden, damit bedarfsweise bei einer Ausschaltung der Kammer 2 aus dem Kristallisationsprozeß zur Beseitigung der Inkrustationen die Zulauflösung unmittelbar in die Kammer 3 eingeleitet werden kann. Auch das Saatgut kann wahlweise über die Leitung 23 und das Ventil 43 sowie die Leitungen 42 oder 44 in die Kammer 2 oder 3 eingeleitet werden.

Es sind ferner die Zu- und Ablaufrohre 31, 32 für die Überführung der Suspension von der einen zur anderen Kammer an Dreiwegeventile 40 angeschlossen und mit einer Durchgehenden Leitung 36 verbunden, so daß die Suspension nicht von der einen Kammer zwingend in die nächstfolgende überführt werden muß, sondern in jede beliebige andere Kammer weitergeleitet werden kann. Hierdurch besteht die Möglichkeit, eine oder mehrere Kammern aus dem Kristallisationsprozeß herauszunehmen, um die Beseitigung der Inkrustation in der beschriebenen Weise vorzunehmen.

Zweckmäßigerweise geht man so vor, daß als erste Kammer die Kammer 5b nach Ablauf einer bestimmten Betriebszeit und auftretende Inkrustationen aus dem Prozeß herausgenommen wird, indem man diese Kammer entleert und mit Dampf bzw. Wasser oder Dünnsaft auskocht. Zur Abführung der Behandlungsflüssigkeit sind die einzelnen Kammern 2 bis 5 bzw. 2b bis 5b mit zusätzlichen Abführungsleitungen 37 verbunden, die in eine in der Zeichnung nicht wiedergegene Sammelleitung ausmünden können. Nach Beseitigung der Inkrustationen der Kammer 5b kann die Suspension aus der Kammer 4b durch entsprechende Steuerung der zugehörigen Dreiwegeventile 40 in die Kammer 5b überführt und somit die Kammer 4b entleert werden, damit diese anschließend von den Inkrustationen befreit wird. Anschließend kann die Kammer 3b von den Inkrustationen befreit werden, indem diese in die Kammer 4b entleert wird. Dieser Vorgang wiederholt sich bis zur Entleerung der Kammer 2, um auch diese von den Inkrustationen zu befreien. Während dieser Zeit werden die übersättigte Zulauflösung und das Saatgut durch die Leitungen 22 und 39 bzw. 23 der Kammer 3 zugeleitet und nach Beendigung des Reinigungsvorganges für die Kammer 2 wiederum bei der Kammer 5b mit der bereits beschriebenen Reinigung begonnen.

Auch die Anordnung nach Fig. 2 ist bezüglich der Rührwerke so ausgebildet, daß die Rührwerke der von der Suspension zuerst durchlaufenen Kammern als hochtourige Mischrührer ausgebildet sind, während die Rührwerke der zuletzt durchströmten Kammern als niedertourige Umwälzrührer ausgeführt sind, wobei auch im Beispiel der Fig. 2 jeweils zwei Rührer auf einer gemeinsamen Welle angeordnet und von einem gemeinsamen Antriebsmotor betätigbar sind.

Die Anordnung von jeweils vier Kammern in den Zylinderbehältern 1 bzw. 1b in Fig. 2 ist ebenso nur beispielhaft, wie dies in Verbindung mit Fig. 1 beschrieben wurde. Bei der Weißzucker-Kristallisation ist die im Zusammenhang mit Fig. 1 beschriebene Erweiterung der zuletzt durchströmten Behandlungskammern nicht erforderlich, weil die Strömungseigenschaften der Suspensionen bei der Weißzucker-Kristallisation bis zum Ende des Behandlungsvorganges noch hinreichend gut sind, um die Umlaufströmung ohne eine Vergrößerung der Durchtrittsquerschnitte durch die Heizkörper zu gewährleisten.

Die Anordnung nach Fig. 1 kann ohne weiteres ähnlich wie die Anordnung nach Fig. 2 ebenfalls mit Einrichtungen zum Entleeren und Reinigen einzelner Behälter unter Aufrechterhaltung des kontinuierlichen Kristallisationsvorganges ausgerüstet sein, wobei im allgemeinen bei Vorrichtungen zur Kristallisation aus Lösungen geringer Reinheit nur die Reinigung der letztdurchströmten Behälter erforderlich ist.

In Abwandlung der in Fig. 1 dargestellten Ausführungsform kann für die Kristallisation von Suspensionen geringer Reinheit auf die Zuführung von Einzugssaft verzichtet werden oder es können nur die erstdurchströmten Behälter mit der Speiseleitung 24 für den Einzugssaft verbunden sein, während der oder die letztdurchströmten Behälter nicht an die genannte Speiseleitung für den Einzeugssaft angeschlossen sind. Die Fühler 27 der nicht an die Speiseleitung 24 angeschlossenen Behälter können statt dessen mit einem in der Zeichnung nicht wiedergegebenen Temperaturregler verbunden sein, welcher in Abhängigkeit von der Zähigkeit, der elektrischen Leitfähigkeit, der Dichte oder Siedepunkterhöhung der Suspension die Temperatur für den Heizdampf der diesen Behältern zugeordeneten Heizkammern regelt, wie dies bereits früher im einzelnen beschrieben worden ist.

Die Suspensionszu- und -abführungsleitungen sind zweckmäßigerweise mit einer Wärmeisolierung ausgerüstet oder können mit einer beheizten Ummantelung versehen sein. In diesen Leitungen können Strömungsdetektoren, beispielsweise Thermometer oder Wärmefühler, angeordnet sein, welche den Suspensionsfluß überwachen und Inkrustationen in diesen Leitungen anzeigen, damit diese in der oben beschriebenen Weise zusammen mit den Behältern gereinigt werden.

**Patentansprüche**

1. Verfahren zur kontinuierlichen Verdampfungskristallisation in einer aus Saft und Kristallen bestehenden Suspension für die Zuckergewinnung, bei dem die Suspension nacheinander durch mehrere voneinander getrennte Behandlungsräume hindurchgeleitet und in den Behandlungsräumen bei gleichzeitiger Wärmezufuhr unter Aufrechterhaltung eines Brüdendruckes von etwa 0,1 bis 0,3 bar in eine interne Umlaufströmung versetzt und in dem ersten Raum mit einer übersättigten Zulauflösung sowie in den nachfolgenden Räumen dosiert mit zugeführtem Einzugssaft vermischt wird, dadurch gekennzeichnet, daß die Suspension in den ersten Behandlungsräumen, durch die sie hindurchgeführt wird, der Einwirkung hochtouriger Mischrührer zur Erzeugung hochturbulenter Scherfelder ausgesetzt und in eine sichtbare Zirkulationsströmung sowie in dem oder den nachfolgenden bzw. letzten Behandlungsräumen in eine im wesentlichen laminare Umlaufströmung durch Einwirkung niedertouriger Rührer versetzt wird, und daß die Suspension in allen Räumen in eine konzentrische Ring-Umlaufströmung mit saugseitiger Zufuhr des Einzugssaftes überführt und auf einem möglichst niedrigen, jedoch die Umlaufströmung gewährleistenden Niveau gehalten wird.

2. Verfahren nach Anspruch 1, dadurch gekennzeichnet, daß die Suspension niveaugesteuert aus den einzelnen Behandlungsräumen jeweils druckseitig abgezogen und saugseitig dem nächstfolgenden Behandlungsraum zugeführt wird.

3. Verfahren nach Anspruch 1 oder 2, dadurch gekennzeichnet, daß der Einzugssaft den einzelnen Behandlungsräumen in Abhängigkeit von der jeweiligen Zähigkeit bzw. elektrischen Leitfähigkeit oder Siedepunkterhöhung bzw. Dichte der in dem entsprechenden Behandlungsraum befindlichen Suspension geregelt zugeführt wird.

4. Verfahren zur kontinuierlichen Verdampfungskristallisation in einer aus Saft und Kristallen bestehenden Suspension für die Zuckergewinnung, bei dem die Suspension nacheinander durch mehrere voneinander getrennte Behandlungsräume hindurchgeleitet und in den Behandlungsräumen bei gleichzeitiger Wärmezufuhr unter Aufrechterhaltung eines Brüdendruckes von etwa 0,1 bis 0,3 bar in eine interne Umlaufströmung versetzt und in dem ersten Raum mit einer übersättigten Zulauflösung sowie ggfs. nachfolgend mit zugeführtem Einzugssaft vermischt wird, dadurch gekennzeichnet, daß die Suspension in den ersten Behandlungsräumen, durch die sie hindurchgeführt wird, der Einwirkung hochtouriger Mischrührer zur Erzeugung hochturbulenter Scherfelder ausgesetzt und in eine Zirkulationsströmung sowie in dem oder den nachfolgenden bzw. letzten Behandlungsräumen in eine im wesentlichen laminare Umlaufströmung durch Einwirkung niedertouriger Rührer versetzt wird, wobei die Suspension in allen Räumen in eine konzentrische Ring-Umlaufströmung überführt und auf einem möglichst niedrigen, jedoch die Umlaufströmung gewährleistenden Niveau gehalten und allenfalls in den erstdurchströmten Räumen abhängig von ihrer jeweiligen Zähigkeit bzw. elektrischen Leitfähigkeit, Siedepunkterhöhung oder Dichte mit saugseitig zugeführtem Einzugssaft vermischt wird, und daß die Zähigkeit bzw. elektrischen Leitfähigkeit oder Siedepunkterhöhung bzw. Dichte der Suspension in den anderen bzw. letztdurchströmten oder allen Räumen durch Einstellung des Temperaturgefälles zwischen dem Heizmedium und der Suspension geregelt wird.

5. Verfahren nach einem der Ansprüche 1 bis 4, dadurch gekennzeichnet, daß zur Kristallisation von Suspensionen höherer Reinheit, wie Weißzucker-Kristallisation, die Suspension jeweils an mindestens einem der Behandlungsräume, beginnend beim letzten Behandlungsraum, vorbeigeführt und der jeweilig freie Behandlungsraum mittels Dampf, Wasser oder Dünnsaft von den Inkrustationen befreit sowie nachfolgend mit der Suspension des jeweils vorhergehenden Behandlungsraumes gefüllt wird.

6. Verfahren nach einem der Ansprüche 1 bis 4, dadurch gekennzeichnet, daß zur Kristallisation von Suspensionen geringer Reinheit, wie Nachprodukt-Suspensionen, die Suspension bei Inkrustationen in einem der Behandlungsräume jeweils an diesem Behandlungsraum vorbeigeführt und der freie Behandlungsraum mittels Dampf, Wasser oder verdünntem Zuckersaft von den Inkrustationen befreit und nachfolgend mit der Suspension des jeweils vorhergehenden Behandlungsraumes gefüllt wird.

7. Vorrichtung zur Durchführung des Verfahrens nach einem der Ansprüche 1 bis 6 mit Behandlungsräumen, die als voneinander getrennte zylindrische Kammern (2 bis 5 bzw. 2b bis 5b) übereinander angeordnet sind, sowie mit Einrichtungen (24, 25, 26 bzw. 20 bzw. 30 bis 32) zur dosierten Zuführung des Einzugssaftes, zum Abführen des Brüdens und zur Überführung der Suspension von der oberen in die jeweils darunterliegende Kammer, wobei die voneinander getrennten Kammern jeweils entsprechend dem Rührwerkskochapparat für die diskontinuierliche Kristallisation ausgebildet sind und eine von Heizdampf durchströmbarer Heizkammer (6) mit radial außenliegenden Rohr-, Ring- oder Plattenheizkörpern oberhalb des Bodens (2a bis 5a) sowie ein zentrisches Leitrohr (9) und ein unten in diesem Leitrohr gehaltenes Rührwerk (12 bis 15) aufweisen, dadurch gekennzeichnet, daß die Rührwerke (10) der erstdurchströmten Kammer bzw. Kammern als hochtourige Mischrührer (10, 12) und die Rührwerke (11) der nachfolgenden Kammern als niedertourige Umwälzrührer (14, 15) ausgeführt sind, und daß in den Kammern (2 bis 5 bzw. 2b bis 5b) jeweils Niveausteuerungen (29, 30) zur Einpegelung des Niveaus dicht oberhalb der Heizkammern (6) vorgesehen sind.

8. Vorrichtungen nach Anspruch 7, dadurch gekennzeichnet, daß zur Zuführung des Einzugssaftes in die Kammern (2 bis 5 bzw. 2b bis 5b) ein oberhalb des Rührers (12 ; 13 ; 14 ; 15) der jeweiligen Kammer ausmündendes Zulaufrohr (26) über ein Steuerventil (25) mit einer Speiseleitung (24) verbunden ist, daß im Raum unterhalb des Rührers bzw. im Boden (2a bis 5a) der jeweiligen Kammer ein mit einem Steuerventil oder einer Steuerklappe (30) ausgerüstetes Suspensionsabzugsrohr (31) vorgesehen und mit einem suspensionszuführrohr (32) der nächstfolgenden Kammer verbunden ist, und daß das Steurventil des Zulaufrohres für den Einzugssaft mit einem in der zugehörigen Kammer angeordneten Fühler (27) zur Ermitlung der Zähigkeit, der elektrischen Leitfähigkeit, der Dichte oder der Siedepunkterhöhung der Suspension und das Steuerventil bzw. die Steuerklappe des Suspensionsabzugsrohres mit einem in der gleichen Kammer dicht oberhalb der Heizeinrichtung angeordneten Niveaufühler oder -schalter (29) verbunden sind.

9. Vorrichtung nach Anspruch 7, dadurch gekennzeichnet, daß nur die erstdurchströmten Kammern zur Zuführung des Einzugssaftes ein oderhalb des Rührers der jeweiligen Kammern ausmündendes Zulaufrohr (26) aufweisen, das über ein Steuerventil (25) mit einer Speiseleitung (24) verbunden ist, daß sich an jede Kammer (2 bis 5 bzw. 2b bis 5b) unterhalb des Rührers (12 bis 15) bzw. im Boden (2a bis 5a) ein mit einem Steuerventil oder eine Steuerklappe (30) ausgerüstetes Suspensionsabzugsrohr (31) anschließt, welches mit einem Suspensionszuführungsrohr (32) der nächsten Kammer verbunden ist und dessen Steuerventil oder Steuerklappe jeweils mit einem in der gleichen Kammer dicht oberhalb der Heizeinrichtung (6) angeordneten Niveaufühler oder -schalter (29) verbunden ist, und daß weiterhin in jeder Kammer ein Fühler (27) zur Ermittlung der Zähigkeit, der elektrischen Leitfähigkeit, der Dichte oder Siedepunkterhöhung der Suspension vorgesehen ist, wobei die Fühler der erstdurchströmten Kammern mit den Steuerventilen in den Zulaufrohren für den Einzugssaft und die anderen Fühler mit Temperaturreglern für den Heizdampf der Heinzkammern verbunden sind.

10. Vorrichtung nach einem der Ansprüche 7 bis 9, dadurch gekennzeichnet, daß bei mehreren übereinander angeordneten Kammern mit hochtourigen Rührern bzw. mit mehreren übereinander angeordneten Kammern mit niedertourigen Rührern die hochtourigen bzw. niedertourigen Rührer jeweils auf einer gemeinsamen Antriebswelle (16 bzw. 17) angeordnet sind.

11. Vorrichtung zur Kristallisation von Nachprodukt-Suspensionen nach einem der Ansprüche 7 bis 10, dadurch gekennzeichnet, daß der Durchmesser der Behandlungskammern (2 bis 5) von der erstdurchströmten bis zur letztdurchströmten Kammer zunimmt oder wenigstens die von der Suspension zuletzt durchströmte(n) Kammer(n) einen größeren Durchmesser als die erstdurchströmten Kammern aufweisen.

12. Vorrichtung zur Kristallisation aus Lösungen höherer Reinheit, insbesondere Weißzucker-Kristallisation, nach einem der Ansprüche 7 bis 10, dadurch gekennzeichnet, daß alle Kammern (2 bis 5 bzw. 2b bis 5b) zur Beseitigung von Inkrustationen an eine Zuführungsleitung für Dampf (41), Wasser und/oder Dünnsaft (33) über Steuerventile (34, 35) angeschlossen und bodenseitig mit ventilgesteuerten Ablaufleitungen (37) für das die Inkrustation auflösende Medium ausgerüstet sind, und daß die Zu- und Ablaufrohre für die Suspension (31, 32) an einer durchgehenden Speiseleitung (36) jeweils über Dreiwegeventile (40) angeschlossen sind.

13. Vorrichtung nach einem der Ansprüche 7 bis 11, dadurch gekennzeichnet, daß zur Kristallisation aus Lösungen geringer Reinheit, wie Nachprodukt-Suspensionen, wenigstens die erstdurchströmten Kammern zur Beseitigung von Inkrustationen an eine Zuführungsleitung für Dampf (41), Wasser und/oder verdünnter Zuckerlösung (33) über Steuerventile (34, 35) angeschlossen und bodenseitig mit ventilgesteuerten Ablaufleitungen (37) für das die Inkrustation auflösende Medium ausgerüstet sind, und daß die Zu- und Ablaufrohre dieser Kammern für die Suspension an einer durchgehenden Verbindungsleitung jeweils über Dreiwegeventile angeschlossen sind.

14. Vorrichtung nach einem der Ansprüche 7 bis 13, dadurch gekennzeichnet, daß die Kammern (2 bis 5 bzw. 2b bis 5b) zwei aufrechtstehende Türme oder Zylinderbehälter (1, 1b) bilden und die Türme oder Zylinderbehälter strömungstechnisch in Reihe geschaltet sind, so daß sie nacheinander von oben nach unten durchströmt werden.

**Claims**

1. Process for continuous evaporation crystallisation in a suspension comprising juice and crystals in order to obtain sugar in which the suspension is passed in succession through a plurality of treatment chambers, which are separate from one another, is set in internal circulation in the treatment chambers with the simultaneous addition of heat while maintaining a vapour pressure of approximately 0.1 to 0.3 bar and is mixed in the first chamber with a supersaturated supply solution and in the subsequent chamber in measured quantities with a supplied feed juice, characterised in that the suspension is subjected — in the first treatment chambers through which it is passed — to the action of high-speed mixers to produce highly turbulent shearing fields and it is set in a visible circulating current and — in the subsequent or final treatment chamber or chambers — in an essentially laminar circulation by the action of low-speed mixers, and the suspension is converted in all chambers to a concentric annular circulation with supply of the feed juice at the suction end and is kept at as low a level as possible which still however ensures circulation.

2. Process according to claim 1, characterised in that the suspension, controlled in terms of level, is withdrawn from each of the individual treatment chambers at the pressure end and is introduced into the next treatment chamber at the suction end.

3. Process according to claim 1 or 2, characterised in that the feed juice is introduced in a controlled manner into the individual treatment chambers as a function of the respective viscosity or electrical conductivity or increase in the boiling point or density of the suspension present in the corresponding treatment chamber.

4. Process for continuous evaporation crystallisation in a suspension comprising juice and crystals in order to obtain sugar, in which the suspension is passed in succession through a plurality of treatment chambers, which are separate from one another, is set in internal circulation in the treatment chambers with the simultaneous addition of heat while maintaining a vapour pressure of approximately 0.1 to 0.3 bar and is mixed in the first chamber with a supersaturated supply solution and subsequently, where appropriate with a supplied feed juice, characterised in that the suspension is subjected — in the first treatment chambers through which it is passed — to the action of high-speed mixers to produce highly turbulent shearing fields and it is set in a circulating current and — in the subsequent or final treatment chamber or chambers — in an essentially laminar circulation by the action of low-speed mixers, the suspension being converted in all chambers to a concentric annular circulation and being kept at as low a level as possible which still however ensures circulation and being mixed at best in the first chambers traversed as a function of its respective viscosity or electrical conductivity or increase in boiling point or density with feed juice supplied at the suction end, and the viscosity or electrical conductivity or increase in boiling point or density of the suspension is controlled in the other or the last chamber traversed or all the chambers by adjusting the drop in temperature between the heating medium and the suspension.

5. Process according to one of the claims 1 to 4, characterised in that in order to crystallise suspensions with a higher degree of purity, such as white sugar crystallisation, the suspension is in each case conducted past at least one of the treatment chambers, beginning with the last treatment chamber, and the free treatment chamber in each case is freed from the encrustation by means of steam, water or clarified juice and subsequently filled with the suspension of the preceding chamber in each case.

6. Process according to one of the claims 1 to 4, characterised in that, in order to crystallise suspensions having a low degree of purity, such as afterproduct suspensions, in the case of encrustation in one of the treatment chambers, the suspension is conducted past this treatment chamber and the free treatment chamber is freed from the encrustation by means of steam, water or diluted syrup and subsequently filled with the suspension of the preceding treatment chamber in each case.

7. Apparatus for carrying out the process according to one of the claims 1 to 6, having treatment chambers, arranged one above the other as cylindrical chambers (2 to 5 or 2b to 5b) which are separate from one another and having devices (24, 25, 26 or 20 or 30 to 32) for the metered supply of the feed juice, for the removal of the vapour and for transferring the suspension from the upper chambers to the chambers lying below in each case, the chambers which are separated from one another being formed in each case for non-continuous crystallisation in accordance with the boiling device of the mixing mechanism and a heating chamber (6) through which heating steam passes and which has tubular, annular or plate heating elements lying radially on the outside above the floor (2a to 5a) and a central conductor pipe (9) and a mixing mechanism (12 to 15) held below in this conductor pipe, characterised in that the mixing mechanisms (10) of the first chamber or chambers traversed are designed as high-speed mixers (10, 12) and the mixing mechanisms (11) of the subsequent chambers are designed as low-speed revolving mixers (14, 15) and in the chambers (2 to 5 or 2b to 5b) level controls (29, 30) are provided in each case for adjusting the levels directly above the heating chambers (6).

8. Apparatus according to claim 7, characterised in that in order to supply the feed juice into the chambers (2 to 5 or 2b to 5b) a feed pipe (26), which opens out above the mixer (12 ; 13 ; 14 ; 15) of the respective chamber, is connected to a feed line (24) via a control valve (25), a suspension draw-off pipe (31) fitted with a control valve or a control flap (30) is provided in the chamber below the mixer or in the floor (2a to 5a) of the respective chamber and is connected to a suspension supply pipe (32) of the next chamber, and the control valve of the supply pipe for the feed juice is connected to a detector (27) arranged in the associated chamber in order to determine the viscosity, the electrical conductivity, the density or the rise in the boiling point of the suspension and the control valve or the control flap of the suspension draw-off pipe is connected to a level detector or switch (29), arranged in the same chamber directly above the heating device.

9. Apparatus according to claim 7, characterised in that only the chambers for supplying the feed juice which are first traversed have a supply pipe (26) which opens out above the mixer of the respective chambers, the supply pipe being connected via a control valve (25) to a supply line (24), a suspension draw-off pipe (31), which is equipped with a control valve or a control flap (30) and which is connected to a suspension supply pipe (32) of the next chamber and the control valve or control flap of which is connected in each case to a level detector or switch (29) arranged in the same chamber directly above the heating device (6), is joined to each chamber (2 to 5 or 2b to 5) below the mixer (12 to 15) or in the floor (2a to 5a) and furthermore a detector (27) is provided in each chamber for determining the viscosity, the electrical conductivity, the density or the rise in the boiling point of the suspension, the detector of the chamber first traversed being connected to the control valves in the supply pipes for the feed juice and the other detector being connected to the temperature controls for the heating steam of the heating chambers.

10. Apparatus according to one of the claims 7 to 9, characterised in that in the case of a plurality of chambers arranged one on top of the other having high-speed mixers, or in the case of a plurality of chambers arranged one on top of the other having low-speed mixers, the high-speed or low-speed mixers are in each case arranged on a common drive shaft (16 or 17).

11. Apparatus for the crystallisation of afterproduct suspensions according to one of the claims 7 to 10, characterised in that the diameter of the treatment chambers (2 to 5) increases from the chamber first traversed to the chamber last traversed or at least the chamber(s) last traversed by the syspension has or have a larger diameter than the chambers first traversed.

12. Apparatus for crystallisation from solutions of higher purity, more particularly white sugar crystallisation, according to one of the claims 7 to 10, characterised in that, in order to remove encrustations, all the chambers (2 to 5 or 2b to 5b) are joined to a supply line for steam (41), water and/or clarified juice (33) via control valves (34 ; 35) and are equipped on the bottom side with valve-controlled outlet lines (37) for the medium dissolving the encrustation, and the supply and outlet lines for the suspension (31, 32) are connected in each case via three-way valves (40) to a continuous supply line (36).

13. Apparatus according to one of the claims 7 to 11, characterised in that, for crystallising from solutions of low purity, such as afterproduct suspensions, at least the chambers first traversed is joined to a supply line for steam (41), water and/or diluted sugar water (33) via control valves (34 ; 35) and in order to remove encrustations on the base are equipped with valve-controlled outlet lines (37) for the medium dissolving the encrustation, and the supply and outlet pipes of these chambers for the suspension are in each case joined to a continuous connection line via three-way valves.

14. Apparatus according to one of the claims 7 to 13, characterised in that the chambers (2 to 5 or 2b to 5b) form two vertical towers or cylindrical containers (1, 1b) and the towers or cylindrical containers are connected in series in terms of flow, so that they are traversed in succession from the top to the bottom.

**Revendications**

1. Procédé de cristallisation continue par évaporation dans une suspension comprenant du jus et des cristaux pour l'extraction du sucre, dans lequel on fait passer la suspension successivement par plusieurs chambres de traitement séparées les unes des autres et on la fait passer, dans les chambres de traitement, en chauffant simultanément tout en maintenant une pression de vapeur d'environ 0,1 à 0,3 bar, à un régime de circulation interne, et on la mélange dans la première chambre avec une solution d'alimentation sursaturée, et dans les chambres suivantes, dans une proportion dosée avec du sucre d'alimentation injecté, caractérisé en ce que l'on fait subir à la suspension dans les premières chambres de traitement par lesquelles elle passe, l'action d'agitateurs-mélangeurs à vitesse de rotation élevée pour produire des champs de cisaillement de forte turbulence et on la fait passer dans un régime de courant de circulation visible, ainsi que, dans la ou les chambres de traitement suivantes ou la ou les dernières chambres de traitement, à l'état de courant de circulation sensiblement laminaire sous l'action d'agitateurs à faible vitesse de rotation, et en ce que l'on fait passer la suspension dans toutes les chambres, à l'état de courant de circulation annulaire avec injection du côté d'aspiration du jus d'alimentation et on la maintient à un niveau aussi bas que possible; mais garantissant le courant de circulation.

2. Procédé selon la revendication 1, caractérisé en ce que l'on évacue la suspension dont le niveau est régulé du côté refoulement de chacune des différentes chambres de traitement et on l'injecte du côté d'aspiration, à la chambre de traitement suivante.

3. Procédé selon la revendication 1 ou 2, caractérisé en ce que l'on injecte le jus d'alimentation aux différentes chambres de traitement avec une régulation fonction de la viscosité ou de la conductibilité électrique, ou bien de l'augmentation du point d'ébullition ou de la densité, de la suspension se trouvant dans la chambre de traitement correspondante.

4. Procédé de cristallisation continue par évaporation dans une suspension comprenant du jus et des cristaux pour l'extraction du sucre, dans lequel on fait passer la suspension successivement par plusieurs chambres de traitement séparées les unes des autres et on la fait passer, dans les chambres de traitement, en chauffant simultanément tout en maintenant une pression de vapeur d'environ 0,1 à 0,3 bar, à un régime de circulation interne, et on la mélange dans la première chambre avec une solution d'alimentation sursaturée et, dans les chambres, suivantes, dans une proportion dosée, avec du sucre d'alimentation amené, caractérisé en ce que l'on fait subir à la suspension dans les premières chambres de traitement par lesquelles elle passe l'action d'agitateurs-mélangeurs à vitesse de rotation élevée pour produire des champs de cisaillement de forte turbulence et on la fait passer dans un régime de circulation ainsi que, dans la ou les chambres de traitement suivantes ou la ou les dernières chambres, à l'état de courant de circulation sensiblement laminaire par l'action d'agitateurs à faible vitesse de rotation, la suspension passant, dans toutes les chambres, à l'état de courant de circulation annulaire concentrique et étant maintenu à un niveau le plus bas possible, mais garantissant le courant de circulation et étant mélangée tout au plus dans les premières chambres parcourues avec du jus d'alimentation injecté par le côté d'aspiration en fonction de la viscosité ou de la conductibilité électrique, de l'augmentation du point d'ébullition ou de la densité qu'elle présente et en ce que l'on régule la viscosité ou la conductibilité électrique, ou bien l'augmentation du point d'ébullition ou la densité de la suspension dans les autres chambres, ou les chambres parcourues en dernier, ou bien dans toutes les chambres, en réglant la diminution de température entre le fluide de chauffage et la suspension.

5. Procédé selon l'une quelconque des revendications 1 à 4, caractérisé en ce que, pour la cristallisation de suspensions de pureté supérieure, comme la cristallisation de sucre raffiné, on fait passer la suspension devant l'une au moins des chambres de traitement, en commençant par la dernière chambre de traitement, et on débarrasse des incrustations la chambre de traitement libre au moyen de vapeur d'eau, d'eau ou du jus clair, puis on la remplit de la suspension de la chambre de traitement respectivement précédente.

6. Procédé selon l'une quelconque des revendications 1 à 4, caractérisé en ce que, pour la cristallisation de suspension de faible pureté, comme des suspensions de produits de deuxième jet, on fait passer la suspension, lorsque des incrustations sont présentes dans l'une des chambres de traitement, devant cette chambre de traitement respective, et l'on débarrasse la chambre de traitement libre au moyen de vapeur d'eau, d'eau ou de jus dilué des incrustations, puis on la remplit de la suspension de la chambre de traitement précédente.

7. Dispositif pour mettre en œuvre le procédé selon l'une quelconque des revendications 1 à 6, comportant des chambres de traitement superposées sous la forme de chambre cylindriques mutuellement séparées (2 à 5 ; respectivement 2b à 5b), ainsi que des dispositifs (24, 25, 26, respectivement 20, respectivement 30 à 32) pour injecter dans des quantités dosées le jus d'alimentation, pour évacuer la vapeur et pour faire passer la suspension de la chambre supérieure dans la chambre respectivement sous-jacente, les chambres séparées entre elles étant conformées chacune selon l'appareil de cuisson à agitateurs destiné à la cristallisation discontinue et comportant une chambre de chauffage (6) parcourue par de la vapeur de chauffage pourvue d'éléments chauffants en forme de tubes, d'anneaux ou de plaques radialement extérieurs situés au-dessus du fond (2a à 5a), ainsi qu'une conduite centrale (9) et un agitateur (12 à 15) fixé inférieurement dans cette conduite, caractérisé en ce que les agitateurs (10) de la chambre ou des chambres parcourues en premier sont réalisés sous la forme d'organes d'agitation (10, 12) à vitesse de rotation élevée, et en ce que les agitateurs (11) des chambres suivantes sont réalisés sous la forme d'organes d'agitation de circulation (14, 15) à faible vitesse de rotation, et en ce que chacune des chambres (2 à 5, respectivement 2b à 5b) comporte des moyens de régulation de niveau (29, 30) pour maintenir le niveau juste au-dessus des chambres de chauffage (6).

8. Dispositif selon la revendication 7, caractérisé en ce que, pour injecter le jus d'alimentation dans les chambres (2 à 5, respectivement 2b à 5b), un tube d'injection (26) débouchant au-dessus de l'agitateur (12 ; 13 ; 14 ; 15) de chaque chambre est relié par une soupape de commande (25) à une conduite d'alimentation (24), en ce que chaque chambre comporte dans l'espace situé au-dessous de l'agitateur ou au fond (2a à 5a) de chaque chambre respective un tube d'évacuation de suspension (31) pourvu d'une soupape de commande ou d'un clapet de commande (30), et est relié à un tube (32) d'amenée de suspension de la chambre suivante, et en ce que la soupape de commande du tube d'injection du jus d'alimentation comporte un capteur (27) placé dans la chambre correspondante, pour déterminer la viscosité, la conductibilité électrique, la densité ou l'augmentation de point d'ébullition de la suspension, et la soupape de commande ou le clapet de commande du tube d'évacuation de la suspension à un capteur ou commutateur de niveau (29) placé dans la même chambre juste au-dessus du dispositif de chauffage.

9. Dispositif selon la revendication 7, caractérisé en ce que seules les premières chambres parcourues comportent, pour l'injection du jus d'alimentation, un tube d'injection (26) débouchant au-dessus de l'agitateur de chaque chambre, qui est relié, par une soupape de commande (25) à une conduite d'alimentation (24) en ce qu'à chaque chambre (2 à 5, respectivement 2b à 5b) se raccorde, au-dessous de l'agitateur (12 à 15), respectivement dans le fond (2a à 5a), un tube d'évacuation de suspension (31) pourvu d'une soupape de commande ou d'un clapet de commande (30), qui est relié à un tube (32) d'injection de suspension de la chambre suivante et dont la soupape de commande ou le clapet de commande est relié à un capteur de niveau ou un commutateur de niveau (29) respectif placé dans la même chambre juste au-dessus du dispositif de chauffage (6), et en ce qu'en outre, dans chaque chambre, un capteur (27) est présent pour déterminer la viscosité, la conductibilité électrique, la densité ou l'augmentation du point d'ébullition de la suspension, les capteurs des chambres parcourues en premier étant reliées aux soupapes de commande situées dans les tubes d'injection du jus d'alimentation et les autres capteurs à des régulateurs de température régulant la température de la vapeur de chauffage des chambres de chauffage.

10. Dispositif selon l'une quelconque des revendications 7 à 9, caractérisé en ce que, lorsqu'il comporte plusieurs chambres superposées pourvues d'agitateurs à vitesse de rotation élevée, et respectivement plusieurs chambres superposées pourvues d'agitateurs à faible vitesse de rotation, les agitateurs à vitesse de rotation élevée, respectivement à faible vitesse de rotation sont placés sur un arbre d'entraînement commun (16, respectivement 17).

11. Dispositif de cristallisation de suspension de produits de deuxième jet selon l'une quelconque des revendications 7 à 10, caractérisé en ce que le diamètre des chambres de traitement (2 à 5) augmente de la chambre parcourue en premier à la chambre parcourue en dernier ou la ou, au moins les chambres parcourues en dernier par la suspension présentent un plus grand diamètre que les chambres parcourues en premier.

12. Dispositif de cristallisation dans des solutions de pureté supérieure, notamment de cristallisation de sucre raffiné, selon l'une quelconque des revendications 7 à 10, caractérisé en ce que toutes les chambres (2 à 5, respectivement 2b à 5b), sont reliées, pour supprimer les incrustations, à une conduite d'injection de vapeur (41), d'eau et/ou de jus clair (33) par des soupapes de commande (34 ; 35) et comportent, vers le fond, des conduites (37) commandées par soupape d'évacuation du fluide dissolvant les incrustations, et en ce que les tubes d'injection et d'évacuation de la suspension (31, 32) sont reliés à une conduite d'alimentation continue (36), par des soupapes à trois voies (40).

13. Dispositif selon l'une quelconque des revendications 7 à 11, caractérisé en ce que, pour la cristallisation dans des solutions de faible pureté, comme des suspensions de produits de deuxième jet, les premières chambres parcourues au moins sont, pour éliminer les incrustations, reliées à une conduite d'injection de vapeur d'eau (41), d'eau et/ou de solution de sucre dilué (33) par l'intermédiaire de soupapes de commande (34 ; 35), et comportent vers le fond des conduites commandées par soupape (37) d'évacuation du fluide dissolvant les incrustations, et en ce que les tubes d'injection et d'évacuation de la suspension de ces chambres sont reliés à une conduite de liaison continue, par des soupapes à trois voies respectives.

14. Dispositif selon l'une quelconque des revendications 7 à 13, caractérisé en ce que les chambres (2 à 5, respectivement 2b à 5b) constituent deux colonnes verticales ou deux récipients cylindriques verticaux (1, 1b) et ces colonnes ou récipients cylindriques sont montés en série du point de la technique de la circulation, de façon à être parcourus successivement de haut en bas.

FIG.1

0 065 775

FIG.2